# EUROPÄISCHE PATENTANMELDUNG

(11) **EP 0 745 999 A2**
(43) Veröffentlichungstag der Anmeldung: **04.12.1996**
(21) Anmeldenummer: 96108049.6
(22) Anmeldetag: 21.05.1996
(51) Int. Cl.: H01B 7/34

(54) **Elektrisches, erdverlegtes Leitungssystem**

(30) Priorität: 30.05.1995 DE 19519690
(71) Anmelder: Felten & Guilleaume Energietechnik AG, D-51063 Köln (DE)
(72) Erfinder: Brakelmann, Heinrich, Prof. Dr.-Ing., 47495 Rheinberg (DE)

(57) **Zusammenfassung**

Es wird ein elektrisches, erdverlegtes Leitungssystem beschrieben mit mindestens einem parallel verlegten Leiter (im folgenden "Kompensationsleiter"), in dem - abhängig von der räumlichen Lage des oder der Kompensationsleiter zum Leitungssystem - ein vorzugsweise phasensynchroner - Stromfluß erzeugt wird, dessen Magnetfeld zu einer Verringerung des Magnetfelds des Leitungssystems beiträgt.

Gemäß der Erfindung werden der oder die Kompensationsleiter in engen thermischen Kontakt mit kühlmittelführenden Kanälen oder Rohren eines Lateralkühlsystems gebracht. Primäre Aufgabe der Lateralkühlung ist die Ableitung der Betriebswärme des elektrischen Leitungssystems. Mit der Erfindung kann auch die im Kompensationsleiter erzeugte Stromwärme gemindert werden. Weiterhin kann bei bestimmter Ausgestaltung eines oder aller Kühlmittelkanäle ein gesonderter Stromleiter für den Kompensationsleiter eingespart werden. Eine solche Ausgestaltung liegt dann vor, wenn ein Kühlmittelkanal vorzugsweise als metallisches Rohr ausgebildet ist, so daß dieses Rohr auch als Stromkompensationsleiter einsetzbar ist.

## Beschreibung

Die Erfindung bestrifft ein elektrisches, erdverlegtes Leitungssystem mit mindestens einem parallel verlegten Leiter (im folgenden "Kompensationsleiter" genannt), in dem - abhängig von der räumlichen Lage des oder der Kompensationsleiter zum Leitungssystem - ein vorzugsweise phasensynchroner - Stromfluß erzeugt wird, dessen Magnetfeld zu einer Verringerung des Magnetfelds des Leitungssystems beiträgt.

Ein solches Leitungssystem mit Kompensationsleiter ist in der DE 43 14 718 A1 vorgeschlagen worden. Erdverlegte Leitungssysteme mit Kühlsystem sind in der Offenlegungsschrift allerdings nicht behandelt worden. Wegen des Auftretens von thermischen Lasten kann der Kompensationbetrieb nach der DE 43 14 718 A1 nicht bei beliebig hohen Leistungen eingesetzt werden.

Es ist die Aufgabe der Erfindung, die Magnetfeldkompensation von erdverlegten Leitungssystemen so zu verbessern, daß auch bei besonders hohen Kompensationsströmen ein Kompensationsbetrieb möglich wird.

Die Aufgabe wird durch die Merkmale des Kennzeichens des ersten Anspruchs gelöst. Vorteilhafte Ausgestaltungen finden sich in den Unteransprüchen.

Gemäß der Erfindung wird mindestens ein Kompensationsleiter in engen thermischen Kontakt mit kühlmittelführenden Kanälen oder Rohren gebracht.

Der Erfindung liegen zwei Überlegungen zugrunde. Vorrangig geht es um den Einsatz eines Kühlsystems in einem Kompensationssystem. Desweiteren wird vorgeschlagen, falls ein Lateralkühlsytem vorhanden ist oder zusammen mit dem Kabelsystem installiert werden soll, dieses Lateralkühlsystem mit mindestens einem Kompensationsleiter zu kombinieren.

Es sind diverse Lateralkühlsysteme bekannt: So können bei einer Flachverlegung eines Dreileiterkabelsystems vier Lateralkühlrohre in derselben Ebene flach verlegt werden oder es werden zwei Kühlrohre in die Zwischenräume und zwei Kühlrohre oberhalb der äußeren Stromleiter verlegt.

Primäre Aufgabe einer Lateralkühlung ist die Ableitung der Betriebswärme des Kabelsystems. Mit der Erfindung kann auch die im Kompensationsleiter erzeugte Stromwärme gemindert werden. Weiterhin kann bei bestimmter Ausgestaltung eines oder aller Kühlmittelkanäle ein gesonderter Stromleiter für den Kompensationsleiter eingespart werden. Eine solche Ausgestaltung liegt dann vor, wenn ein Kühlmittelkanal vorzugsweise als metallisches Rohr ausgebildet ist, so daß dieses Rohr auch als Stromkompensationsleiter einsetzbar ist.

Der Vorteil der Erfindung ist unmittelbar erkennbar. Die Umgebung des Leitungssystems wird insbesondere bei höchsten Leistungen sowohl thermisch als auch magnetisch entlastet. Der Kompensationsaufwand gemäß der Erfindung ist relativ klein. Zumindest entstehen günstige Kompensationswirkung schon bei geringer Verlegetiefen, so daß auch der wirtschaftliche Aufwand in Grenzen bleibt. Der Betrieb eines Kabelsystems mit der vorgeschlagenen Ausgestaltung wird auch bis zu höchsten Leistungen wirtschaftlich.

Die Stromspeisung nach Betrag und Phase in den Kompensationsleitern wird so gewäht, daß im interessierenden Raumbereich der Kabeltrasse (insbesondere an der Erdoberfläche oder in ihrer Nähe) das resultierende Magnetfeld klein gehalten wird. Eine unterstützende Maßnahme kann darin bestehen, im Zuge der Kompensationskabel in bestimmten Abständen (z.B. in Muffenabstand) Spulen einzubauen, deren Wicklungszahl im Hinblick auf die Größe der Kompensationsströme gewählt sind. Die gewünschte Phasenlage der Kompensationsströme kann durch eine entsprechende Positionierung der Spulen, durch Hintereinanderschalten unterschiedlich positionierter Spulen oder auch durch Zusatzimpedanzen im Zuge der Kompensationskabel ereicht werden.

Die elektrische Betriebstechnik und die Kompensationswirkung ist schon ausführlich in der DE 43 14 718 A1 beschrieben worden, so daß auf sie hier nicht näher eingegangen wird.

Normalerweise werden Kühlrohre einer Lateralkühlung aus nichtmagnetischem Material (Aluminium, Aluminiumlegierung oder Kunststoff) benutzt, da sonst ihre Hysteresisverluste zu groß werden. Hiervon soll auch bei der Erfindung im Regelfall Gebrauch gemacht werden.

Der verlangte enge Kontakt mit dem Kühlmedium bedeutet auch, daß der oder die Kompensationsleiter mit mindestens einem kühlmittelführenden Kanal in einer gemeinsamen Umhüllung liegen können. Es können auch mehrere, vorzugsweise symmetrisch, angeordnete Kühlmittelkanäle vorhanden sein. Diese Anordnung ist als Bündelkühlung bekannt.

Der vom Kompensationsstrom beaufschlagte Leiter kann einadrig oder mehradrig ausgebildet sein. Leiterquerschnitte des Kompensations-Leitungssystems sind entsprechend den durch Rechner-Simulation ermittelbaren Lasten zu wählen.

Mindestens ein Kanal oder ein Rohr des Lateralkühlsystems soll metallisch ausgebildet sein. Vorzugsweise können Wellmantelrohre aus Aluminium oder aus Edelstahl eingesetzt werden. Das Kühlrohr übernimmt dann selbst die Funktion eines einadrigen Kompensationsleiters.

Ein einadriger, isolierter Kompensationsleiter kann aus einem mit oder ohne Schlag geführten Draht bestehen. Die Alternative zur Einadrigkeit ist die mehradrige Ausführung. Dabei sind verschiedene Ausgestaltungen möglich: Ein einem Kühlmittelkanal zugeordneter Kompensationsleiter besteht aus mehreren ohne Schlag geführten Drähten. Ein einem Kühlmittelkanal zugeordneter Kompensationsleiter ist als elektrisch leitende Umwicklung des Kühlmittelkanals ausgebildet. Die Umwicklung des Kühlmittelkanals kann aus einer Drahtwicklung oder aus einem Drahtgewebe bestehen.

Eine weitere vorzugsweise Ausgestaltung kann darin bestehen, daß der Kompensationsleiter innerhalb eines nichtmetallischen Kühlmittelkanals untergebracht ist und die Ummantelung des Kühlmittelkanals aus unmagnetischem Material besteht. Der Kompensationsleiter kann mit Kunststoffschichtenmantel versehen werden, so daß Korrosionsprobleme vermieden werden.

Der oder die Kompensationsleiter sind hochspannnungfest elektrisch isoliert. Wobei eine Isolierdicke der Umhüllung für 1 kV ausreichen dürfte.

## Patentansprüche

1. Elektrisches, erdverlegtes Leitungssystem mit mindestens einem parallel verlegten Leiter - im folgenden "Kompensationsleiter" genannt - in dem, abhängig von der räumlichen Lage des oder der Kompensationsleiter zum Leitungssystem und der Art des elektrischen Leitungssystems, ein Stromfluß erzeugt wird, dessen Magnetfeld zu einer Verringerung des Magnetfelds des Leitungssystems beiträgt, **dadurch gekennzeichnet,** daß der Kompensationsleiter in thermischem Kontakt mit dem Kühlmittel eines Kühlsystems steht.

2. Elektrisches Leitungssystem mit Kompensationsleiter nach Anspruch 1, **dadurch gekennzeichnet,** daß als Kühlsystem ein Lateralkühlsystem eingesetzt wird.

3. Elektrisches Leitungssystem mit Kompensationsleiter nach Anspruch 1 oder 2**, dadurch gekennzeichnet,** daß der vom Kompensationsstrom beaufschlagte Leiter einadrig ausgebildet ist.

4. Elektrisches Leitungssystem mit Kompensationsleiter nach Anspruch 3, **dadurch gekennzeichnet,** daß mindestens ein Kanal des Kühlsystems metallisch ausgebildet ist.

5. Elektrisches Leitungssystem mit Kompensationsleiter nach Anspruch 3, **dadurch gekennzeichnet,** daß ein einadriger Kompensationsleiter aus einem mit oder ohne Schlag geführten Draht besteht.

6. Elektrisches Leitungssystem mit Kompensationsleiter nach Anspruch 1 oder 2, **dadurch gekennzeichnet,** daß mindestens ein einem Kühlmittelkanal zugeordneter Kompensationsleiter mehradrig ausgebildet ist.

7. Elektrisches Leitungssystem mit Kompensationsleiter nach Anspruch 6, **dadurch gekennzeichnet,** daß ein einem Kühlmittelkanal zugeordneter Kompensationsleiter aus mehreren ohne Schlag geführten Drähten besteht.

8. Elektrisches Leitungssystem mit Kompensationsleiter nach Anspruch 6 oder 7, **dadurch gekennzeichnet,** daß ein einem Kühlmittelkanal zugeordneter Kompensationsleiter als elektrisch leitende Umwicklung des Kühlmittelkanals ausgebildet ist.

9. Elektrisches Leitungssystem mit Kompensationsleiter parallel verlegtem Leiter nach Anspruch 8, **dadurch gekennzeichnet,** daß die Umwicklung des Kühlmittelkanals aus einer Drahtwicklung oder aus einem Drahtgewebe besteht.

10. Elektrisches Leitungssystem mit Kompensationsleiter nach einem der vorhergehenden Ansprüche, **dadurch gekennzeichnet,** daß der Kompensationsleiter innerhalb eines nichtmetallischen Kühlmittelkanals untergebracht ist und die Ummantelung des Kühlmittelkanals aus unmagnetischem Material besteht.

11. Elektrisches Leitungssystem mit Kompensationsleiter nach einem der vorhergehenden Ansprüche, **dadurch gekennzeichnet,** daß der oder die Kompensationsleiter hochspannnungfest elektrisch isoliert sind.
